(19) Europäisches Patentamt
European Patent Office
Office européen des brevets

(11) Numéro de publication: **0 284 519 B1**

(12) **FASCICULE DE BREVET EUROPEEN**

(45) Date de publication de fascicule du brevet: **14.04.93**

(51) Int. Cl.⁵: **C08G 73/12**

(21) Numéro de dépôt: **88420059.3**

(22) Date de dépôt: **22.02.88**

(54) **Nouveaux bismaleimides siloxanes et leur procédé de préparation.**

(30) Priorité: **24.02.87 FR 8702615**

(43) Date de publication de la demande:
**28.09.88 Bulletin 88/39**

(45) Mention de la délivrance du brevet:
**14.04.93 Bulletin 93/15**

(84) Etats contractants désignés:
**AT BE CH DE ES FR GB IT LI LU NL SE**

(56) Documents cités:
**GB-A- 2 137 644**
**US-A- 4 395 527**

(73) Titulaire: **CIBA-GEIGY AG**
**Klybeckstrasse 141**
**CH-4002 Basel(CH)**

(72) Inventeur: **Barthelemy, Pascal**
**21, rue de la Part-Dieu**
**F-69003 Lyon(FR)**

EP 0 284 519 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne de nouveaux bis-maléimides N,N'-disubstitués renfermant dans leur structure un groupement diorganopolysiloxane. Elle concerne encore un procédé de préparation desdits N,N'-bis-maléimides à partir d'anhydride maléique et d'amines renfermant dans leur structure un groupement diorganopolysiloxane.

Ces bis-maléimides N,N'-disubstitués peuvent être utilisés notamment pour la préparation de polyimides thermostables. On connait déjà (cf. US - A - 4.011.279 et US - A - 4.395.527) des polyimides linéaires ou des poly(amide-imide) renfermant dans leur structure un groupement diorganopolysiloxane qui sont fabriqués par réaction entre un dianhydride d'acide tétracarboxylique ou un monoanhydride d'acide tricarboxylique avec par exemples des alpha,oméga-bis(aminophénoxy alkyl)diorganopolysiloxanes. On connait encore (cf. GB - A - 2.137.644) l'existence de N,N'-bis-maléimides siloxanes de formule générale :

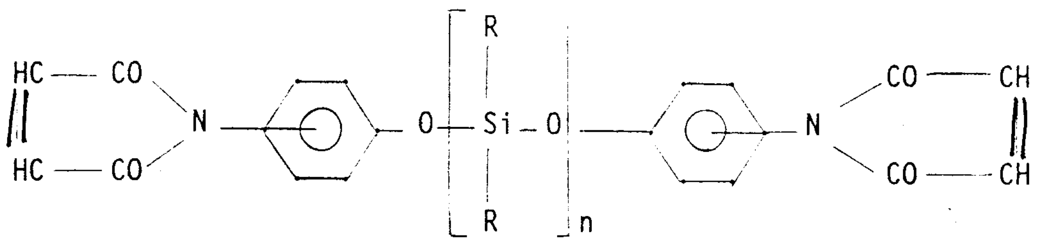

dans laquelle R représente un atome d'hydrogène, un radical alkyle ou un radical phényle et n est un nombre allant de 1 à 6, qui sont obtenus par réaction de l'anhydride maléique sur des alpha,oméga-bis-(aminophénoxy) diorganopolysiloxanes ayant de 1 à 6 groupements

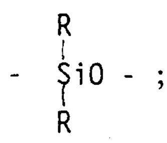

ces bis-maléimides renferment dans leur structure des liaisons Si-O-C qui, du fait de leur solidité moyenne, sont de nature à limiter les applications possibles de ces composés.

En outre, ces bis-maléimides ne peuvent être mélangés avec d'autres composés comprenant des fonctions imides pour la fabrication de polymères thermostables compte-tenu de l'insolubilité et incompatibilité de ces composés entre-eux.

L'objet de la présente invention est constitué par de nouveaux bis-maléimides N,N'-disubstitués renfermant dans leur structure un groupement polydiorganosiloxane et ne comportant pas de liaison Si-O-C, caractérisés en ce qu'ils répondent essentiellement à la formule générale :

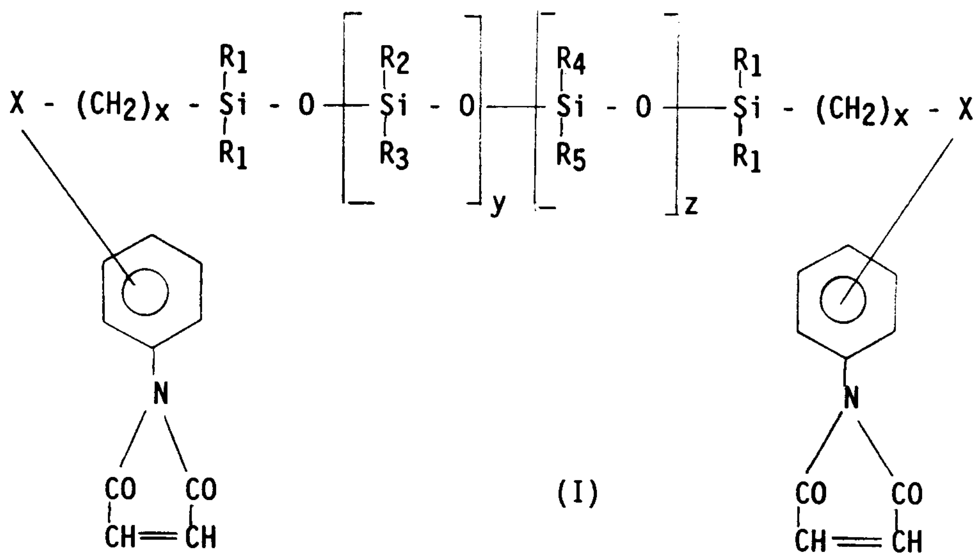

(I)

dans laquelle :

. X, qui est en position ortho, méta ou para par rapport à l'atome de carbone du cycle benzénique relié à l'azote, représente un atome d'oxygène

. $R_1$, représente un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement - CN.

. $R_2$, $R_3$, $R_4$, $R_5$ représentent chacun un radical alkyle linéaire ou ramifié ayant de 1 à 12 atomes de carbone éventuellement substitués par un ou plusieurs atomes de chlore, de brome ou de fluor ou par un groupement - CN, ou un radical phényle éventuellement substitué par un ou plusieurs radicaux alkyles et/ou alkoxy ayant de 1 à 4 atomes de carbone ou par un ou plusieurs atomes de chlore ; le rapport

$$\frac{\text{nombre de liaisons Si-phényle (éventuellement substitué)}}{\text{nombre de liaisons Si-méthyle}}$$

étant au moins égale à 0,25 ;

. le symbole x est un nombre entier situé dans l'intervalle allant de 2 à 8.

. les symboles y et z représentent des nombres, identiques ou différents, entiers ou fractionnaires, dont la somme se situe dans l'intervalle allant jusqu'à 100.

Pour un composé de formule (I), lorsque y et/ou z sont supérieurs à 1, on est en présence d'un composé à structure polymère et on a rarement un seul composé, mais le plus souvent un mélange de composés de même structure chimique, qui diffèrent par le nombre d'unités récurrentes de leur molécule ; cela conduit à une valeur moyenne de y et/ou z qui peut être entière ou fractionnaire.

Comme bis-maléimides préférentiellement représentatifs de la présente invention, on peut citer ceux qui répondent à la formule (I) dans laquelle :

1. ; $R_1$, $R_2$, $R_3$, identiques ou différents, représentent chacun un radical alkyl linéaire ou ramifié, ayant de 1 à 6 atomes de carbone ; $R_4$, $R_5$ représentent chacun un radical phényle ; x = 2,3,4 ou 5 ; y + z se situe dans l'intervalle allant de 4 à 70.

2. ; $R_1$, $R_2$, $R_4$, identiques ou différents, représentent chacun un radical alkyle, linéaire ou ramifié, ayant de 1 à 6 atomes de carbone ; $R_3$, $R_5$ représentent chacun un radical phényle ; x = 2, 3, 4 ou 5 ; y + z se situe dans l'intervalle allant de 4 à 70.

3. ; $R_1$ représente un radical alkyle linéaire ou ramifié, ayant de 1 à 6 atomes de carbone ; $R_2$, $R_3$, $R_4$ et $R_5$ représentent chacun un radical phényle ; x = 2, 3, 4 ou 5 ; y + z se situe dans l'intervalle allant de 4 à 70.

Comme bis-maléimides encore plus préférentiellement représentatifs de la présente invention, on peut citer ceux qui répondent à la formule (I) dans laquelle :

4. ; $R_1 = R_2 = R_3$ = radical alkyle linéaire ayant de 1 à 3 atomes de carbone ; $R_4 = R_5$ radical phényle ; x = 2, 3 ou 4 ; y + z se situe dans l'intervalle allant de 4 à 70.

5. ; $R_1 = R_2 = R_4$ = radical alkyle linéaire ayant de 1 à 3 atomes de carbone ; $R_3 = R_5$ = un radical phényle ; x = 2, 3 ou 4 ; y + z se situe dans l'intervalle allant de 4 à 70.

6. $R_1$ = radical alkyle linéaire ayant de 1 à 3 atomes de carbone ; $R_2 = R_3 = R_4 = R_5$ = radical phényle ; x = 2, 3 ou 4 ; y + z se situe dans l'intervalle allant de 4 à 70.

Comme bis-maléimides qui sont tout particulièrement représentatifs de la présente invention, on peut citer ceux qui répondent à la formule (I) dans laquelle :

7. ; $R_1 = R_2 = R_3$ = radical méthyle ; $R_4 = R_5$ = radical phényle ; x = 3 ; y + z se situe dans l'intervalle allant de 4 à 70.

8. ; $R_1 = R_2 = R_4$ = radical méthyle ; $R_3 = R_5$ = radical phényle ; x = 3 ; y + z se situe dans l'intervalle allant de 4 à 70.

9. ; $R_1$ = radical méthyle ; $R_2 = R_3 = R_4 = R_5$ = radical phényle ; x = 3 ; y + z se situe dans l'intervalle allant de 4 à 70.

Comme exemples spécifiques de bis-maléimides qui sont tout particulièrement représentatifs de la présente invention, on citera notamment :

10.

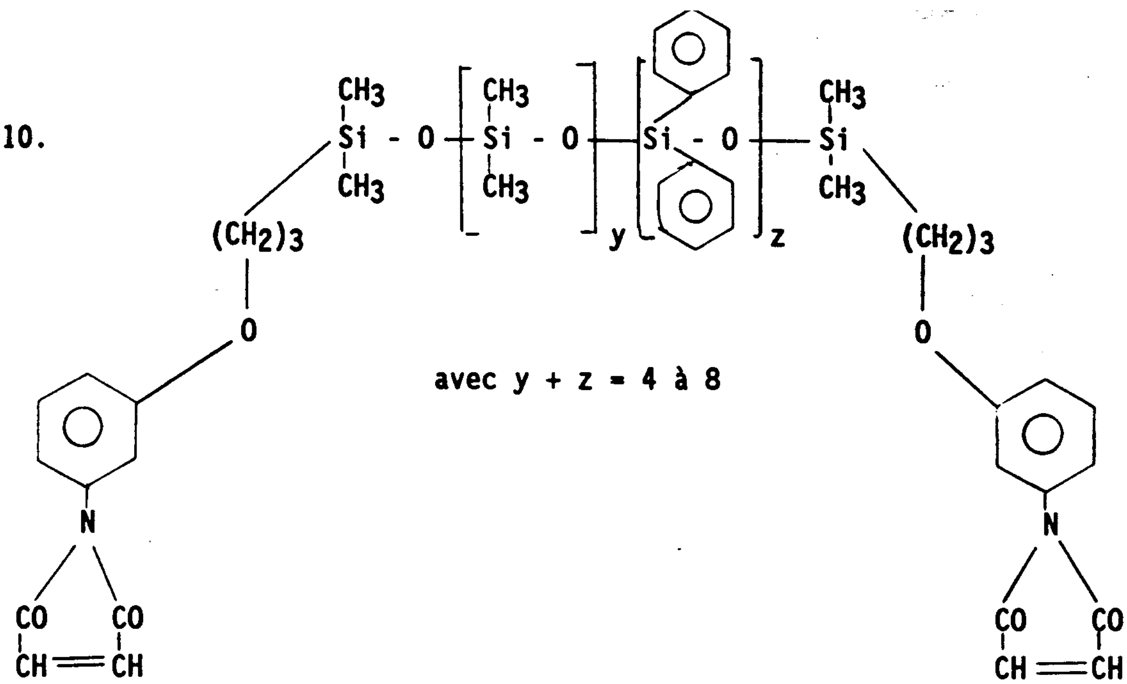


11.

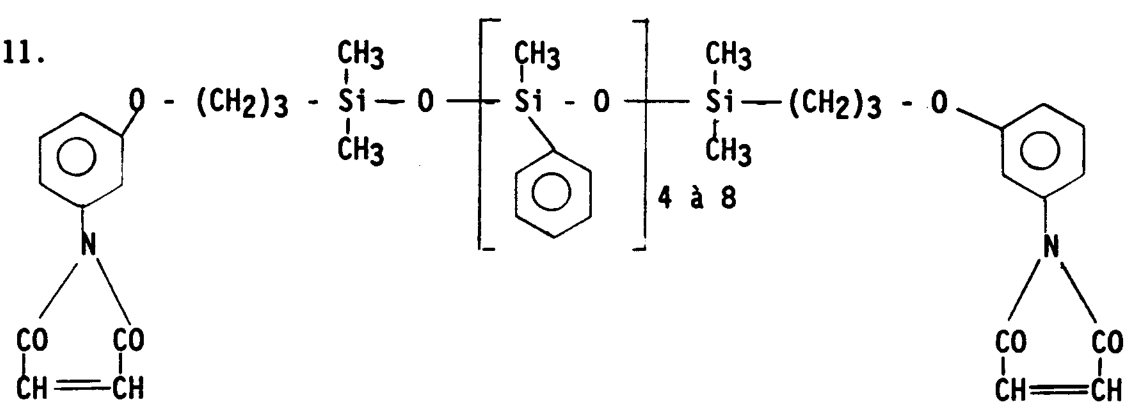

La présente invention concerne également un procédé de préparation des bis-maléimides de formule (I) selon lequel on fait réagir l'anhydride maléique, en présence d'un agent déshydratant, d'une amine tertiaire, d'un diluant organique et d'un catalyseur, sur une diamine à groupement diorganopolysiloxane de formule :

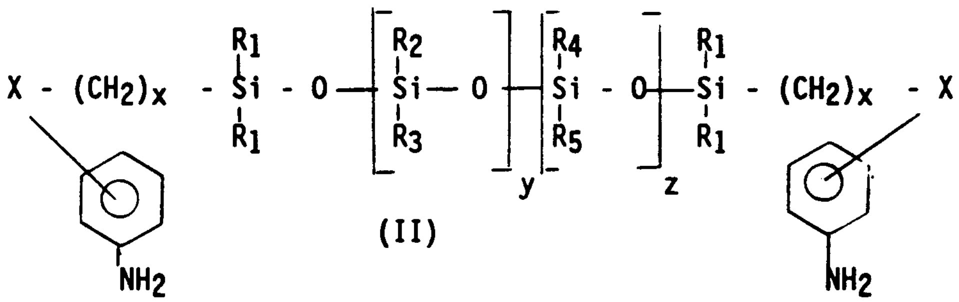

(II)

dans laquelle X, $R_1$, $R_2$, $R_3$, $R_4$, $R_5$, x, y et z ont les significations données ci-avant.

Ces diamines (II) à groupement diorganopolysiloxane sont des composés qui sont bien connus dans l'art antérieur. Elles sont par exemple décrites dans le brevet anglais GB - B - 1.062.418 et dans le brevet américain US - A - 4.395.527.

Selon ces documents, une première méthode de préparation de ces diamines, applicable en particulier lorsque l'on peut obtenir un composé de formule (II) où y = Z = 0, c'est à dire lorsque l'on peut obtenir une diamine à groupement diorganodisiloxane, consiste à faire réagir un composé de formule

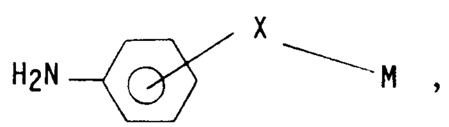

où X a la signification donnée ci-avant et M est un métal alcalin ou alcalino-terreux, avec un bis-(halogénoalkyl)disiloxane de formule :

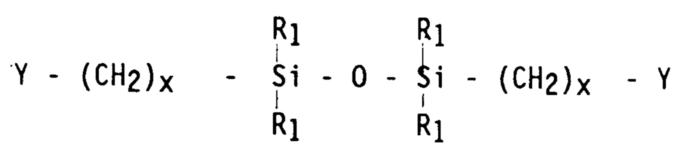

où x a la valeur indiquée ci-avant et Y est atome de chlore, de brome ou d'iode, en opérant à une température comprise entre 20° et 200° C en présence d'un solvant polaire aprotique.

Dans le cas où l'on veut obtenir une diamine de formule (II) où y et/ou z sont différents de zéro, une seconde méthode de préparation enseignée par ces documents consiste à copolymériser une mole de diamine à groupement diorganodisiloxane, préparée comme indiqué ci-dessus, avec une quantité d'un ou plusieurs diorganopolysiloxanes cycliques capables de donner y moles de groupes siloxy de formule :

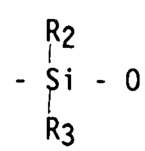

et/ou z moles de groupes siloxy de formule :

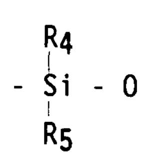

En général, la réaction se déroule à une température comprise entre 80° et 250° C en présence là aussi d'un solvant et éventuellement d'un catalyseur approprié.

Une autre façon de préparer les diamines de formule (II), avec y et/ou z étant égaux à zéro ou différents de zéro, est de faire réagir sur un composé à insaturation éthylénique de formule :

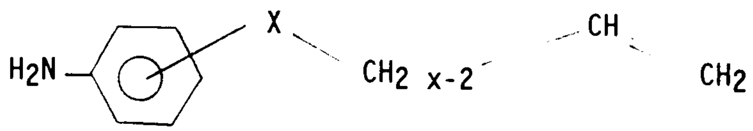

dans laquelle X, qui est en position ortho, méta ou para par rapport à l'atome de carbone du cycle benzénique relié à l'azote, et x ont les significations données ci-avant, un alpha, oméga-bis(hydrogéno)diorganopolysiloxane de formule :

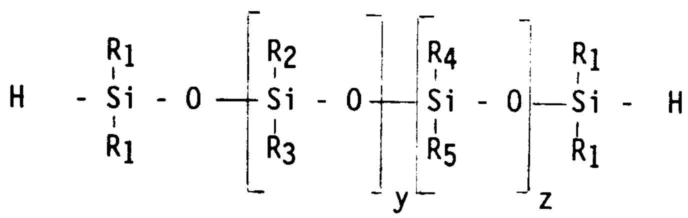

dans laquelle $R_1$, $R_2$, $R_3$, $R_4$, $R_5$, y et z ont les significations données ci-avant. Cette réaction d'hydrosilylation est conduite en opérant en masse en absence de solvant et en utilisant un catalyseur à base de platine. Les alpha, oméga-bis(hydrogéno)diorganopolysiloxane mis en oeuvre sont des produits bien connus dans l'industrie des silicones et sont, pour certains, disponibles dans le commerce. Ils sont par exemple décrits dans les brevets français FR-A1-2.486.952 et FR-A5- 2.058.988.

Quand on choisit de faire appel à cette réaction d'hydrosilylation pour préparer une diamine de formule (II), le substrat aminé à insaturation éthylénique qui est bien adapté pour réagir avec l'alpha, oméga-bis-(hydrogéno)diorganopolysiloxane consiste notamment dans une allyloxyaniline de formule :

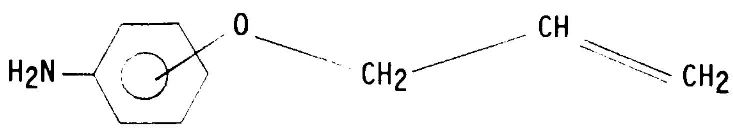

Dans ces conditions privilégiées, on est donc conduit à des diamines de formule (II) qui serviront à fabriquer certains des bis-maléimides de formule (I), c'est à dire ceux où X = - O -, x = 3 et $R_1$, $R_2$, $R_3$, $R_4$, $R_5$, y et z ont les significations générales ou précises données ci-avant.

Pour en revenir au procédé de préparation des bis-maléimides de formule (I), en fait réagir, comme indiqué ci-avant, la diamine de formule (II) avec l'anhydride maléique en présence d'un agent déshydratant, d'une amine tertiaire, d'un diluant organique et d'un catalyseur.

L'anhydride maléique est utilisé en quantités au moins égales à une mole par fonction $NH_2$ disponible ; on utilise généralement des quantités plus importantes qui sont de l'ordre de 1,01 à 1,5 moles par fonction $NH_2$ disponible.

Comme déshydratant on utilise avantageusement un anhydride d'acide carboxylique inférieur tel que l'anhydride acétique en quantité au moins égale à une mole par fonction $NH_2$ disponible présent dans la molécule de diamine de formule (II) engagée. On utilise généralement des quantités plus importantes qui sont de l'ordre de 1,05 à 1,5 moles par fonction $NH_2$ disponible.

Parmi les amines tertiaires convenables, on peut citer notamment les trialkylamines ainsi que les N,N-dialkylanilines dans lesquelles les radicaux alkyles ont de 1 à 12 atomes de carbone. La triéthylamine et la N,N-diméthylaniline sont d'un emploi avantageux. Les quantités d'amine tertiaire se situent généralement entre 0,05 et 0,8 moles par fonction $NH_2$ disponible.

La réaction est effectuée au sein d'un diluant organique liquide dans les conditions opératoires, pratiquement entre 20° et 100° à la pression atmosphérique. Parmi les diluants utilisables, on donnera la préférence à ceux qui dissolvent, dans les conditions de température adoptées pour la réaction et en présence des autres constituants du mélange réactionnel, l'anhydride maléique de départ.

Parmi eux on peut citer notamment :

- les hydrocarbures tels que le benzène, le toluène, le cyclohexane,
- les dérivés chlorés tels que le chlorobenzène ou le chlorure de méthylène,
- les éthers oxydes cycliques ou non cycliques tels que le tétrahydrofuranne, le dioxane ou l'éther éthylique,
- les dialkylcétones telles que l'acétone ou la méthyl éthyl cétone.

En tant que catalyseurs, on peut utiliser un dérivé du nickel soluble dans la phase liquide du mélange réactionnel comme par exemple des sels de nickel d'acides carboxyliques, éventuellement hydratés ainsi que les formes chélatées de ce métal. L'acétate et l'acétylacétonate conviennent particulièrement bien. Ces catalyseurs sont employés en quantités très faibles, de l'ordre de $0,5.10^{-3}$ à $5.10^{-3}$ moles par mole fonction $NH_2$ disponible.

Pratiquement, pour la mise en oeuvre du procédé, on commence par faire réagir l'anhydride maléique et la diamine de formule (II) en opérant dans le diluant choisi à une température allant de 30° à 100° C pendant une durée allant, selon la température, de quelques minutes à 1 heure. Puis on ajoute dans le milieu réactionnel l'agent déshydratant, l'amine tertiaire et enfin le catalyseur, puis on laisse réagir le mélange dans les conditions de température adoptées précédemment pendant une durée allant, selon la température, de 1 heure à 3 heures. Généralement, la réaction est terminée par addition d'un non solvant tel que l'eau, puis le bis-maléimide de formule (I) préparé est isolé selon les méthodes usuelles.

Les nouveaux bis-maléimides de formule générale (I) peuvent être utilisés sous forme de mélange avec un ou plusieurs autres composés comportant des groupements imides pour préparer des polymères thermostables pour moulage ou pour imprégnation qui possèdent des propriétés mécaniques intéressantes.

Plus précisément ces polymères thermostables à groupements imides sont notamment ceux qui comprennent le produit de réaction, à une température allant de 50° C à 300° C, entre :

- (a) un N,N'-bis-maléimide à groupement diorganopolysiloxane de formule (I) ;
- et (b) un N,N'-bis-maléimide ou une association de plusieurs bis-maléimides de formule :

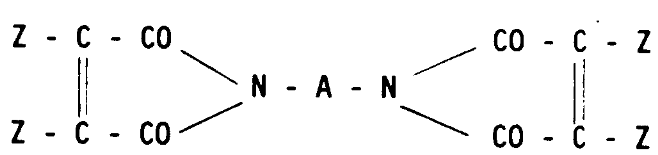

(III)

dans laquelle :

. les symboles Z, identiques ou différents, représentent chacun H, $CH_3$ ou Cl ;

. le symbole A représente un radical divalent choisi dans le groupe constitué par les radicaux : cyclohexylènes ; phénylènes ; méthyl-4 phénylène-1,3 ; méthyl-2 phénylène-1,3 ; méthyl-5 phénylène-1,3 ; diéthyl-2,5 méthyl-3 phénylène-1,4 ; et les radicaux de formule :

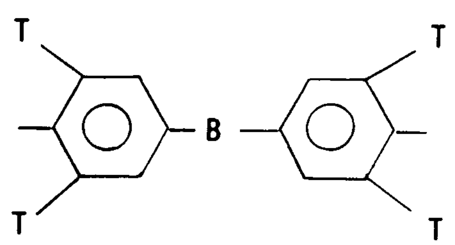

dans laquelle B représente un lien valentiel simple ou un groupement :

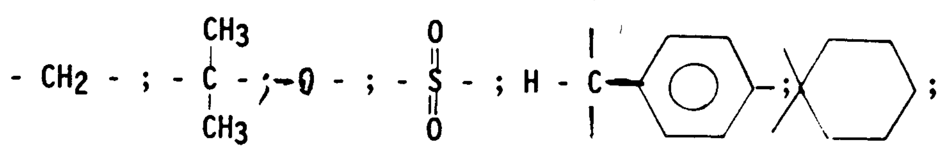

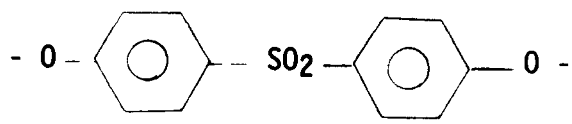

et les symboles T, identiques ou différents, représentent chacun un atome d'hydrogène, un radical méthyle, éthyle ou isopropyle ;

Quand la préparation des polymères est effectuée en masse, on utilise comme bis-maléimides de formule (I) ceux où le groupement diorganopolysiloxane renferme une pluralité de liaisons Si - phényle ou Si - phényle substitué. Des bis-maléimides de ce type sont ceux appartenant aux groupes suivants, classés par ordre croissant de préférence :

- bis-maléimides n° 1, 2 et 3 ;
- bis-maléimides n° 4, 5 et 6 ;
- bis-maléimides n° 7, 8 et 9.

A titre d'exemples spécifiques de bis-maléimides de ce type, on se reportera notamment aux composés n° 10, 11.

A titre d'exemples spécifiques de bis-maléimides de formule (III), on peut citer en particulier :

- le N,N'-métaphénylène-bis-maléimide,
- le N,N'-paraphénylène-bis-maléimide,
- le N,N'-4,4'-diphénylméthane-bis-maléimide,
- le N,N'-4,4'-diphényléther-bis-maléimide,
- le N,N'-4,4'-diphénylsulphone-bis-maléimide,
- le N,N'-cyclohexylène-1,4-bis-maléimide,
- le N,N'-4,4'-diphényl-1,1 cyclohexane-bis-maléimide,
- le N,N'-4,4'-diphényl-2,2 propane-bis-maléimide,
- le N,N'-4,4'-triphénylméthane-bis-maléimide,
- le N,N'-méthyl-2 phénylène-1,3-bis-maléimide,
- le N,N'-méthyl-4 phénylène-1,3-bis-maléimide,
- le N,N'-méthyl-5 phénylène-1,3-bis-maléimide,

Ces bis-maléimides peuvent être préparés selon les procédés décrits dans le brevet américain US - A - 3 018 290 et le brevet anglais GB - A - 1 137 290. On utilise de préférence, pour la préparation de ces polymères thermostables, le N,N'-4,4'-diphénylméthane-bis-maléimide pris seul ou en mélange avec le N,N'-méthyl-2 phénylène-1,3-bis-maléimide, le N,N'-méthyl-4 phénylène-1,3-bis-maléimide et/ou le N,N'-méthyl-5 phénylène-1,3-bis-maléimide.

Dans les polymères thermostables qui viennent d'être décrits, on choisit les quantités de réactifs (a) et (b) de manière à avoir, en poids par rapport au poids total de ces constituants :

- de 2 à 50 % et, de préférence, de 5 à 20 % de bis-maléimide de formule (I),
- et de 50 à 98 % et, de préférence, de 80 à 95 % de bis-maléimide(s) de formule (III).

Les polymères à groupements imides précités peuvent être préparés par chauffage direct du réactif (a) et du réactif (b) au moins jusqu'à l'obtention d'un mélange liquide homogène. La température peut varier en fonction de l'état physique des composés en présence mais elle se situe généralement entre 50° C et 300° C. Il est avantageux d'amener et de maintenir les composés de départ dans un état de mélange intime avant et pendant le chauffage à l'aide par exemple d'un bonne agitation.

La préparation des polymères peut aussi être effectuée par chauffage du mélange des réactifs au sein d'un diluant organique qui est liquide dans une partie au moins de l'intervalle 50° C - 250° C. Parmi ces diluants, on peut mentionner en particulier des hydrocarbures aromatiques comme les xylènes et le toluène, des hydrocarbures halogénés comme les chlorobenzènes, des solvants polaires comme le dioxanne, le tétrahydrofuranne et l'oxyde de dibutyle, le diméthylformamide, le diméthylsulfoxyde, la N-méthylpyrrolidone, le diméthylacétamide, le méthylglycol et la méthyl-éthyl-cétone. Les solutions ou suspensions de

polymères peuvent être utilisées telles quelles pour de nombreux emplois ; on peut également isoler les polymères, par exemple par filtration, éventuellement après précipitation au moyen d'un diluant organique miscible avec le solvant utilisé. Dans ce contexte, on peut utiliser avantageusement un hydrocarbure dont le point d'ébullition ne dépasse pas notablement 120° C.

Il doit être compris que les propriétés des polymères à groupements imides peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les composés cités dans le paragraphe précédent et ne présentant pas de ramollissement notable au dessous de la température à laquelle ils commencent à se dégrader.

Mais ces polymères peuvent également se présenter sous l'aspect de prépolymères (P) solubles dans les solvants organiques polaires et présentant un point de ramollissement à une température inférieure à 200° C (en général ce point de ramollissement est compris entre 50° C et 150° C). Ces prépolymères peuvent être obtenus en masse en chauffant le mélange des réactifs jusqu'à l'obtention d'un produit homogène ou pâteux à une température généralement située entre 50° et 180° C pendant une durée qui peut aller de quelques minutes à quelques heures, cette durée étant d'autant plus brève que la température adoptée est plus élevée. Avant de soumettre le mélange des réactifs au chauffage, il est avantageux là aussi d'en effectuer par agitation un mélange intime préalable. La préparation des prépolymères peut également être effectuée en suspension ou en solution dans un diluant qui est liquide dans une partie au moins de l'intervalle 50° - 180° C.

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous forme de poudres qui se prêtent remarquablement aux opérations de moulage par compression, éventuellement en présence de charges à l'état de poudres, de sphères, de granules, de fibres ou de paillettes. Sous forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300° C, généralement comprises entre 150° et 250° C ; une mise en forme complémentaire peut être effectuée pendant le durcissement, éventuellement sous vide ou sous une pression super-atmosphérique, ces opérations pouvant également être consécutives.

Les polymères selon l'invention intéressent les domaines de l'industrie qui requièrent des matériaux doués de bonnes propriétés mécaniques et électriques ainsi que d'une grande inertie chimique à des températures de 200° à 300° C. A titre d'exemples, ils conviennent pour la fabrication d'isolants en plaques ou tubulaires pour transformateurs électriques, de supports de circuits imprimés, de pignons, de bagues etc... Les articles préimprégnés sont utilisables pour la réalisation des pièces ayant des formes et des fonctions variées dans de nombreuses industries comme par exemple dans l'aéronautique. Ces pièces, appelées stratifiés, qui peuvent être des pièces de révolution sont obtenues par placage de plusieurs couches de préimprégnés sur une forme ou un support. On peut utiliser aussi les préimprégnés comme renforts ou comme moyen de réparation de pièces détériorées. Il est aussi possible de concevoir des pièces selon les techniques de l'enroulement filamentaire avec ou sans support ; il est encore possible de faire du moulage par injection ou de la pultrusion. On rappellera que pour faire par exemples des objets moulés, il est possible de partir, soit du mélange des réactifs, soit d'un prépolymère (P). Quand on part directement du mélange des réactifs, on donne à ce mélange la forme de l'objet désiré et on effectue ensuite le durcissement par chauffage. Quand on part du prépolymère (P), il peut être moulé par simple coulée à chaud ou par injection et on provoque ensuite son durcissement par chauffage.

Les exemple suivants sont donnés à titre illustratif mais non limitatif.

EXEMPLE 1

Préparation du bis-maléimide de formule :

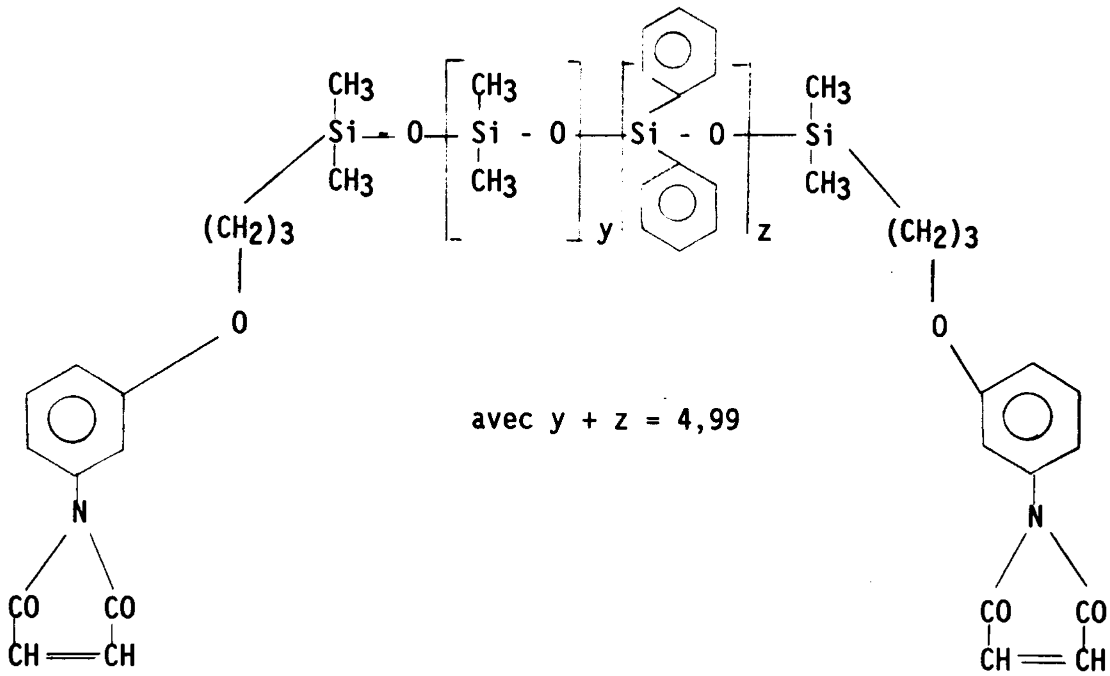

1.1 Préparation de la diamine à groupement diorganopolysiloxane de laquelle dérive ce bis-maléimide :

Dans un réacteur en verre muni d'une agitation centrale, d'une ampoule de coulée et d'un réfrigérant ascendant dans lequel on établit une légère surpression d'azote sec,

. on charge 105 g (0,07 mole) d'un alpha, oméga-bis(hydrogéno)diorganopolysiloxane de formule :

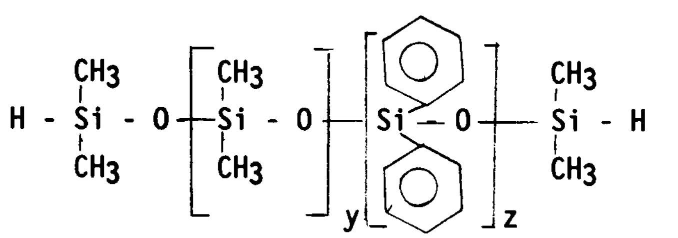

avec y + z = 4,99

dont la masse moléculaire est de l'ordre de 1492 g ;

On introduit ensuite le réacteur dans un bain d'huile préchauffé à 55° C, puis on additionne le catalyseur. Ce dernier est le catalyseur de Karsted (complexe à base, de platine élémentaire et de ligands divinyl-1,3 tétraméthyl-1,1,3,3 disiloxane) : il est en solution dans le toluène (concentration de 3,5 % en poids) et

. on utilise 350 microlitres de la solution de catalyseur ; le rapport r (poids de platine élémentaire / poids de la masse réactionnelle) est égal à $75.10^{-6}$ ;

. on coule dans le réacteur, en 50 minutes, 21 g (0,14 mole) de métaallyloxyaniline et on revient à température ambiante 30 minutes après la fin de la coulée de ce réactif.

Le produit obtenu, d'un poids de 125,3 g, est une huile visqueuse, brune, présentant un spectre de RMN du proton en accord avec la structure :

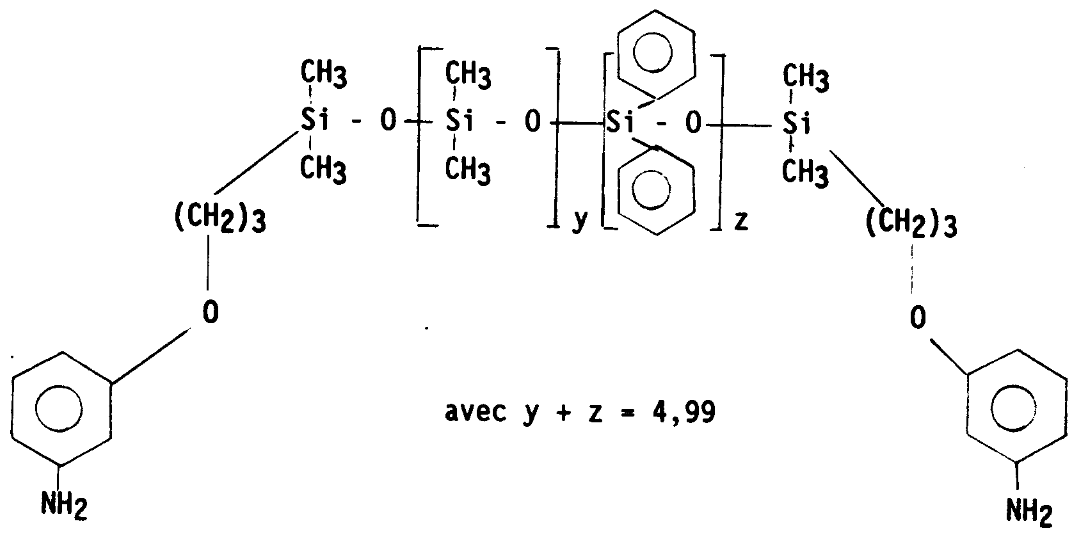

avec y + z = 4,99

et ayant une masse moléculaire de l'odre de 1790 g. Dans ces conditions, le taux de transformation des réactifs engagés est de 100 % (par RMN et analyse infra-rouge ; on ne détecte ni d'amine, ni d'oligomère siloxane hydrogéné) et le rendement en poids en diamine souhaitée est de 100 %.

1.2. Préparation du bis-maléimide diorganopolysiloxane :

Dans un réacteur en verre muni d'une agitation centrale, et d'un réfrigérant ascendant dans lequel on établit une légère surpresssion d'azote sec et qui est placé dans un bain d'huile préchauffé à 55° C,

. on coule 50 $cm^3$ d'une solution dans l'acétone de 65 g (0,036 mole et 0,072 fonction $NH_2$) de la diamine siloxane préparée au paragraphe 1.1 précédent et 20 $cm^3$ d'une solution dans l'acétone de 7,8 g (0,079 mole) d'anhydride maléique.

Lorsque les coulées sont terminées, chaque ampoule est rincée par 5 $cm^3$ d'acétone, qui sont ensuite rajoutés à la masse réactionnelle maintenue sous agitation pendant encore 15 minutes.

Dans l'ampoule de coulée ayant contenu l'anhydride maléique,

. on coule ensuite 9,6 g (0,094 mole) d'anhydride acétique et dans l'autre ampoule, 2,45 g (0,024 mole) de triéthylamine.

Ces deux composés sont alors coulés dans le réacteur, puis on ajoute 0,5 $cm^3$ d'une solution aqueuse contenant 0,0528 mole d'acétate de nickel pour 100 $cm^3$ de solution.

Le mélange réactionnel est maintenu à reflux sous agitation pendant 2 heures 30 minutes. La température est ensuite abaissée à 20 °C.

Le mélange réactionnel est diluée avec 80 $cm^3$ d' eau glacée (5° C) mous forte agitation et on extrait ensuite avec 80 $cm^3$ d'acétate d'éthyle le produit huileux présent. La phase organique obtenue est lavée avec trois fois 80 $cm^3$ d'eau pour arriver à pH6 dans les eaux de lavage, puis séchée pendant 2 heures sur sulfate de sodium anhydre. Après filtration, on élimine par évaporation l'acétate d'éthyle de la phase organise en terminant cette opération sous pression réduite (70 Pa environ) à 60° C et

on recueille 69 g (soit un rendement en poids de 98 % par rapport à la théorie) d'une huile visqueuse, brun-orangé, dont le spectre RMN est en accord avec la structure du bis-maléimide souhaité qui a été défini au début de cet exemple. Sa masse moléculaire est de l'ordre de 1950 g. En RMN du proton, on note l'absence de la diamine de la part et on note l'absence de la diamine de départ et on note les déplacements chimiques suivants :

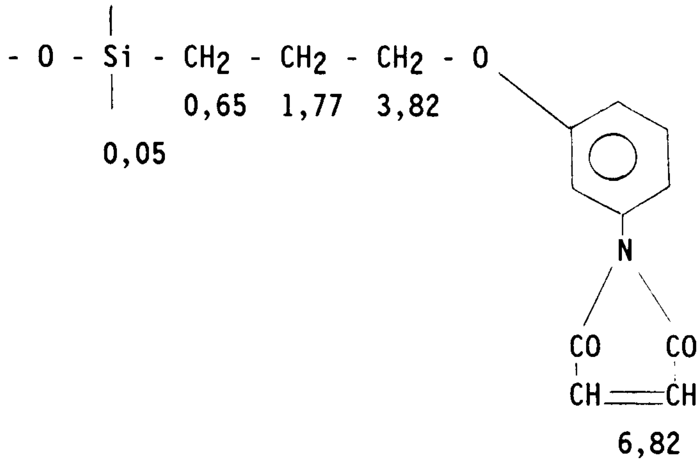

Le rapport : $\dfrac{\text{nombre de liaisons Si - phényle}}{\text{nombre de liaisons Si - méthyle}}$

est trouvé égal à 0,25.

En spectrométrie infra-rouge, on note la présence des bandes suivantes : $\nu$ (C = O imide) = 1710-1730 $cm^{-1}$ ; $\nu$ (C-N-C maléimide) = 1160 $cm^{-1}$ ; $\nu$ (C-N-C) = 1400 $cm^{-1}$.

EXEMPLE 2

Préparation du bis-maléimide de formule :

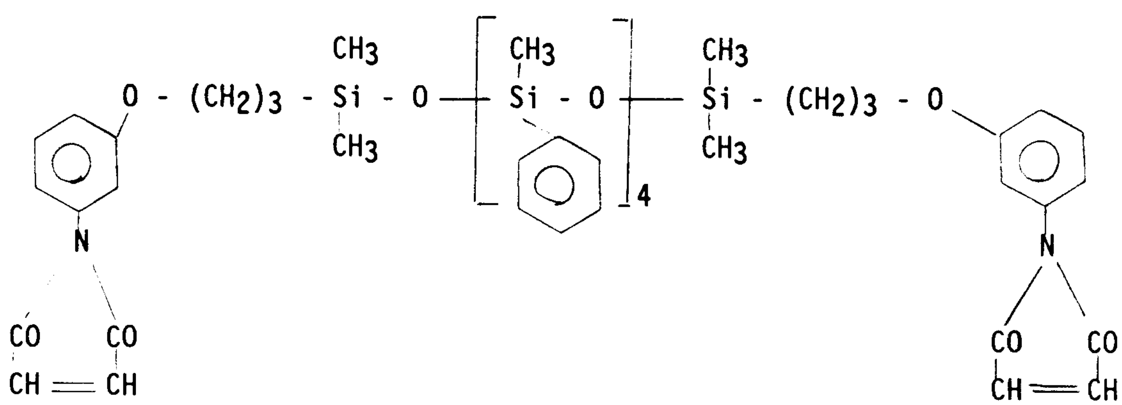

1.1 Préparation de la diamine à groupement diorganopolysiloxane de laquelle dérive ce bis-maléimide :

Le mode opératoire est le même que celui décrit dans l'exemple 1, paragraphe 1.1, sauf en ce qui concerne les points suivants :

. on charge 312 g (0,46 mole) d'un alpha, oméga-bis(hydrogéno)diorganopolysiloxane de formule :

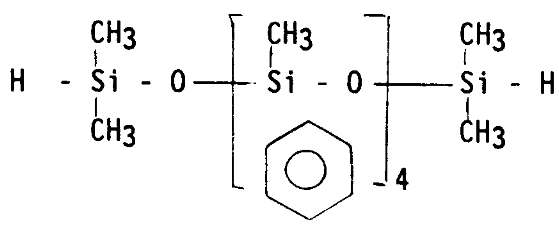

dont la masse moléculaire est de l'ordre de 678 g ;

. on utilise 1,49 $cm^3$ de la solution de catalyseur ; le rapport r (poids de platine élémentaire / poids de la masse réactionnelle) est égal à $91.10^{-6}$ ;

. on coule dans le réacteur, en 60 minutes, 137 g (0,92 mole) de métaallyloxyaniline et on revient à température ambiante 30 minutes après la fin de la coulée de ce réactif.

Le produit obtenu, d'un poids de 448,9 g, est une huile visqueuse brun-orangé, présentant un spectre de RMN du proton en accord avec la structure :

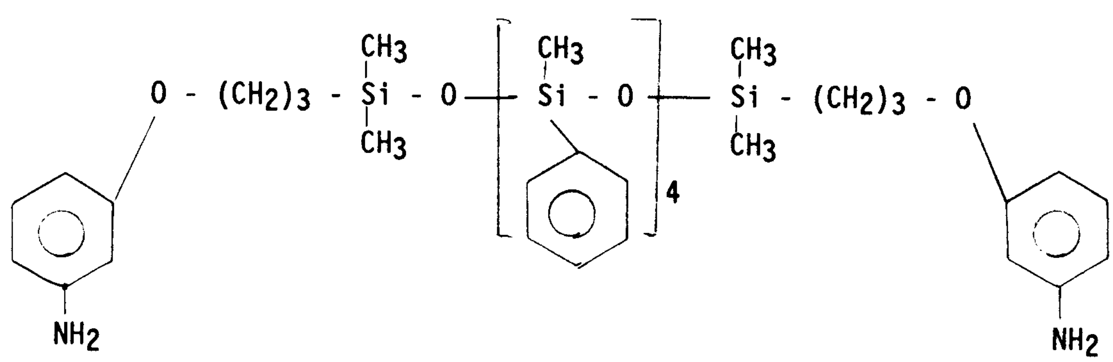

et ayant un masse moléculaire de l'ordre de 976 g. Dans ces conditions, le taux de transformation des réactifs engagés est de 100 % ( par RMN et analyse infra-rouge ; on ne détecte ni d'amine, ni d'oligomère siloxane hydrogéné) et le rendement en poids en diamine souhaitée est de 100 %.

2.2 Préparation du bis-maléimide diorganopolysiloxane :

Le mode opératoire est le même que celui décrit dans l'exemple 1, paragraphe 1.2, sauf en ce qui concerne les points suivants :

. on coule 20 $cm^3$ d'une solution dans l'acétone de 25 g (0,025 mole et 0,050 fonction $NH_2$) de la diamine siloxane préparée au pragraphe 4.1 précédent et 15 $cm^3$ d'une solution dans l'acétone de 6,4 (0,055 mole) d'anhydride maléique ;

. on coule ensuite 6,1 g (0,06 mole) d'anhydride acétique et 1,67 g (0,0165 mole) de triéthylamine, puis on ajoute 0,3 $cm^3$ de la solution d'acétate de nickel.

On recueille 27,3 g (soit un rendement en poids de 96 % par rapport à la théorie) d'une huile visqueuse, brun-orangé, dont le spectre RMN est en accord avec la structure du bis-maléimide souhaité qui a défini au début de cet exemple. Sa masse moléculaire est de l'ordre de 1136 g. En RMN du proton, on note l'absence de la diamine de départ et on note les déplacements chimiques suivants :

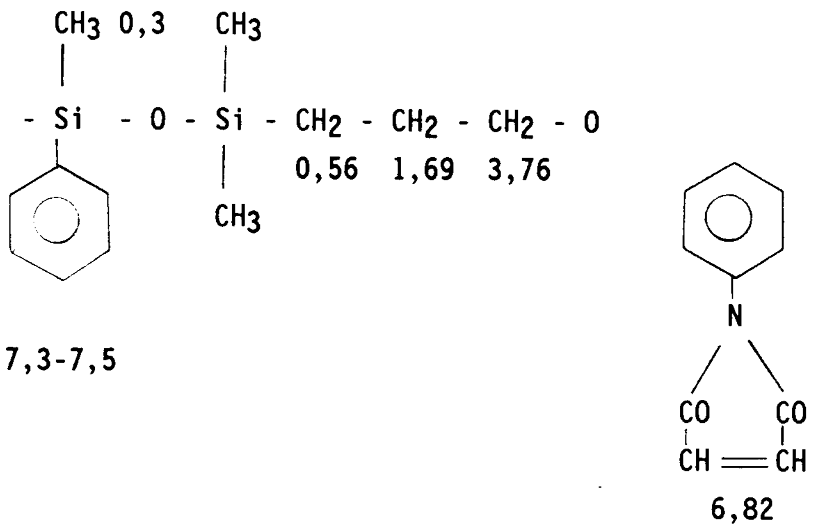

Le rapport : $$\frac{\text{nombre de liaisons Si - phényle}}{\text{nombre de liaisons Si - méthyle}}$$

est trouvé égal à 0,5.

En spectrométrie infra-rouge, on note la présence des bandes suivantes : ν (C = O imide) = 1710 - 1730 $cm^{-1}$ ; ν (C-N-C maléimide) = 1160 $cm^{-1}$ ; ν (C-N-C) = 1400 $cm^{-1}$.

EXEMPLE 3

Préparation d'un polymère thermostable.

Dans un réacteur en verre muni d'une tubulure latérale de dégazage et d'un agitateur de type ancre et plongé dans un bain d'huile préchauffé à 160° C, on introduit 9,6 g du bis-maléimide à groupement diorganopolysiloxane qui est décrit dans l'exemple 2. Après 2 minutes d'agitation, on additionne alors en 8 minutes 70,4 g de N,N'-4,4'-diphénylméthane-bis-maléimide. On laisse réagir encore sous agitation pendant 15 minutes, dont les 5 dernières sont opérées sous une pression réduite de $13,3.10^2$ Pa.

On coule ensuite la masse réactionnelle, d'aspect limpide, dans un moule préchauffé à 150° C dans le but de préparer des plaques de dimension 140 x 100 x 4 mm qui vont subir le cycle de cuisson suivant :

. 10 minutes à 160° C,
. 130 minutes entre 160° et 250° C,
. 16 heures à 250° C,
. et 2 heures entre 250° C et 25° C.

Après démoulage, les plaques à base de polymère durci, brun et translucide, sont découpés de façon à obtenir des éprouvettes de dimensions 60 x 10 x 4 mm sur lesquelles sont réalisés des essais de choc CHARPY non entaillé selon la norme NFT 51035. La résilience à 25° C ainsi obtenue est de 3,4 $kJ/m^2$.

A titre d'essai comparatif, on a reproduit les opérations décrites ci-avant en chargeant dans le réacteur, préchauffé à 175° C, seulement 100 g de N,N'-4,4'-diphénylméthane-bis-maléimide. On laisse réagir sous agitation pendant 12 minutes, dont 5 sont opérées sous une pression réduite de $6,65.10^2$ Pa.

Le cycle de cuisson des plaques moulées à 200° C est le suivant :

. 1 heure 45 minutes à 200° C,
. 1 heure entre 200° et 250° C,
. 16 heures à 250° C,
. et 2 heures entre 250° C et 25° C

La résilience à 25° C , mesurée sur les éprouvettes, est de 1,7 $kJ/m^2$.

**Revendications**

**Revendications pour les Etats contractants suivants : AT, BE, CH, DE, FR, GB, IT, LI, LU, NL, SE**

**1.** Bis-maléimides N,N'-disubstitués renfermant dans leur structure un groupement polydiorganosiloxane et ne comportant pas de liaison Si-O-C, caractérisés en ce qu'ils répondent à la formule générale :

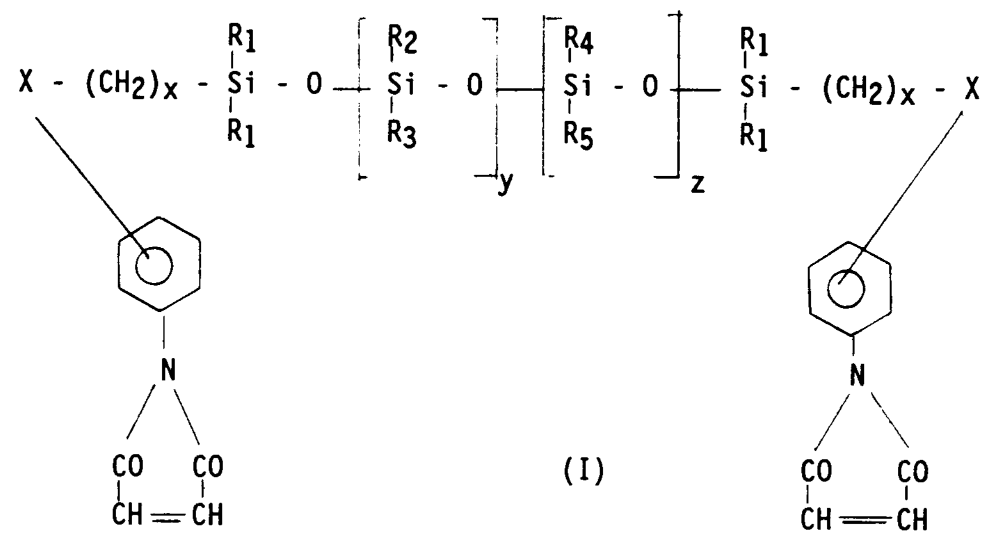

(I)

dans laquelle :

. X représente l'oxygène

. $R_1$, représente un radical alkyle linéaire ou ramifié, ayant de 1 à 12 atomes de carbone éventuellement substitués par un ou plusieurs atomes de chlore, de brome ou de fluor ou par un groupement - CN.

. $R_2$, $R_3$, $R_4$, $R_5$ représentent chacun un radical alkyle linéaire ou ramifié ayant de 1 à 12 atomes de carbone éventuellement substitués par un ou plusieurs atomes de chlore, de brome ou de fluor ou par un groupement - CN, ou un radical phényle éventuellement substitué par un ou plusieurs radicaux alkyles et/ou alkoxy ayant de 1 à 4 atomes de carbone ou par un ou plusieurs atomes de chlore ; le rapport

$$\frac{\text{nombre de liaisons Si-phényle}}{\text{nombre de liaisons Si-méthyle}} \text{ (éventuellement substitué)}$$

étant au moins égal à 0,25 ;

. le symbole x est un nombre entier situé dans l'intervalle allant de 2 à 8.

. les symboles y et z représentent des nombres, identiques ou différents, entiers ou fractionnaires, dont la somme se situe dans l'intervalle allant jusqu'à 100.

**2.** Bis-maléimides selon la revendication 1, caractérisés en ce qu'ils répondent à la formule (I) dans laquelle :

1\. ; $R_1$, $R_2$, $R_3$, identiques ou différents, représentent chacun un radical alkyle, linéaire ou ramifié, ayant de 1 à 6 atomes de carbone ; $R_4$, $R_5$ représentent chacun un radical phényle ; x = 2,3,4 ou 5 ; y + z se situe dans l'intervalle allant de 4 à 70.

2\. ; $R_1$, $R_2$, $R_4$, identiques ou différents, représentent chacun un radical alkyl linéaire ou ramifié, ayant de 1 à 6 atomes de carbone ; $R_3$, $R_5$ représentent chacun un radical phényle ; x = 2,3,4 ou 5 ; y + z se situe dans l'intervalle allant de 4 à 70.

3\. ; $R_1$ représente un radical alkyle linéaire ou ramifié, ayant de 1 à 6 atomes de carbone ; $R_2$, $R_3$, $R_4$ et $R_5$ représentent chacun un radical phényle ; x = 2, 3, 4 ou 5 ; y + z se situe dans l'intervalle allant de 4 à 70.

**3.** Bis-maléimides selon la revendication 2, caractérisés en ce qu'ils répondent à la formule (I) dans laquelle :

4. ; $R_1 = R_2 = R_3$ = radical alkyle linéaire ayant de 1 à 3 atomes de carbone ; $R_4 = R_5$ = radical phényle ; x = 2, 3 ou 4 ; y + z se situe dans l'intervalle allant de 4 à 70.

5. ; $R_1 = R_2 = R_4$ = radical alkyle linéaire ayant de 1 à 3 atomes de carbone ; $R_3 = R_5$ = un radical phényle ; x = 2, 3 ou 4 ; y + z se situe dans l'intervalle allant de 4 à 70.

6. ; $R_1$ = radical alkyle linéaire ayant de 1 à 3 atomes de carbone ; $R_2 = R_3 = R_4 = R_5$ = un radical phényle ; x = 2, 3 ou 4 ; y + z se situe dans l'intervalle allant de 4 à 70.

**4.** Bis-maléimides selon la revendication 3, caractérisés en ce qu'ils répondent à la formule (I) dans laquelle :

10. ; $R_1 = R_2 = R_3$ = un radical méthyle ; $R_4 = R_5$ = un radical phényle ; x = 3 ; y + z se situe dans l'intervalle allant de 4 à 70.

11. ; $R_1 = R_2 = R_4$ = un radical méthyle ; $R_3 = R_5$ = un radical phényle ; x = 3 ; y + z se situe dans l'intervalle allant de 4 à 70.

12. ; $R_1$ = un radical méthyle ; $R_2 = R_3 = R_4 = R_5$ = un radical phényle ; x = 3 ; y + z se situe dans l'intervalle allant de 4 à 70.

**5.** Procédé de préparation des bis-maléimides de formule (I) selon l'une quelconque des revendications 1 à 4, caractérisés en ce que l'on fait réagir l'anhydride maléique, en présence d'un agent déshydratant, d'une amine tertiaire, d'un diluant organique et d'un catalyseur, sur une diamine à groupement diorganopolysiloxane de formule :

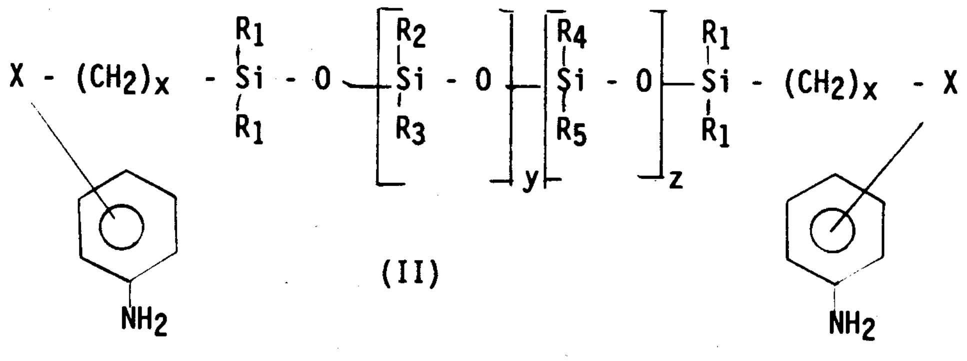

(II)

dans laquelle X, $R_1$, $R_2$, $R_3$, $R_4$, $R_5$, x, y et z ont les significations données ci-avant dans l'une des revendications 1 à 4.

**6.** Procédé selon la revendication 5, caractérisé en ce que l'agent déshydratant est l'anhydride acétique.

**7.** Procédé selon l'une quelconque des revendications 5 et 6 caractérisé en ce que l'amine tertiaire est la triéthylamine, la quantité de ce composé se situant entre 0,05 et 0,8 mole par fonction $NH_2$ disponible.

**8.** Procédé selon l'une quelconque des revendications 5 à 7, caractérisé en ce que le catalyseur est constitué par un dérivé du nickel soluble dans la phase liquide du mélange réactionnel, la quantité de catalsyseur se situant entre $0{,}5.10^{-3}$ et $5.10^{-3}$ moles par fonction $NH_2$ disponible.

**Revendications pour l'Etat contractant suivant : ES**

**1.** Procédé de préparation de bis-maléimides N,N'-disubstitués renfermant dans leur structure un groupement polydiorganosiloxane et ne comportant pas de liaison Si-O-C, répondant à la formule générale :

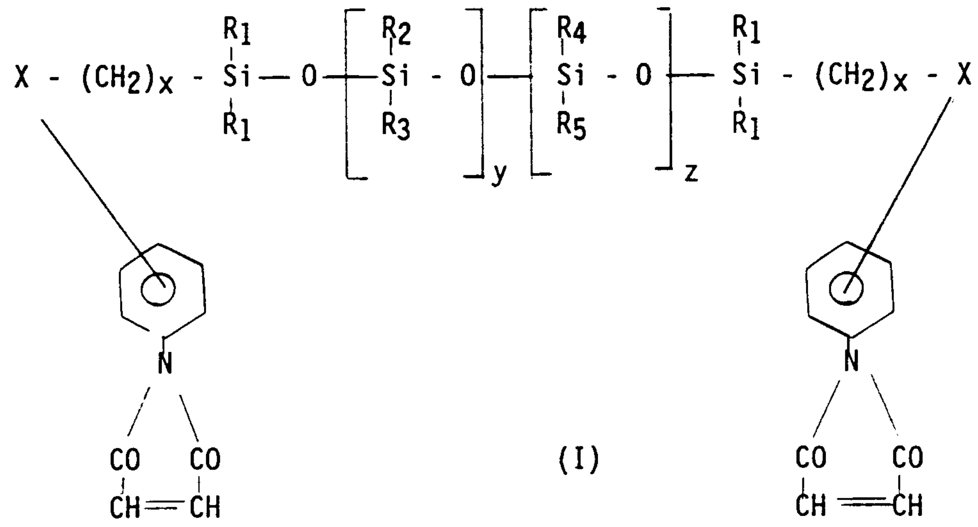

(I)

dans laquelle :

- . X représente l'oxygène
- . $R_1$, représente un radical alkyle linéaire ou ramifié, ayant de 1 à 12 atomes de carbone éventuellement substitués par un ou plusieurs atomes de chlore, de brome ou de fluor ou par un groupement - CN.
- . $R_2$, $R_3$, $R_4$, $R_5$ représentent chacun un radical alkyle linéaire ou ramifié ayant de 1 à 12 atomes de carbone éventuellement substitués par un ou plusieurs atomes de chlore, de brome ou de fluor ou par un groupement - CN, ou un radical phényle éventuellement substitué par un ou plusieurs radicaux alkyles et/ou alkoxy ayant de 1 à 4 atomes de carbone ou par un ou plusieurs atomes de chlore ; le rapport

$$\frac{\text{nombre de liaisons Si-phényle}}{\text{nombre de liaisons Si-méthyle}}\ \text{(éventuellement substitué)}$$

étant au moins égal à 0,25 ;

- . le symbole x est un nombre entier situé dans l'intervalle allant de 2 à 8.
- . les symboles y et z représentent des nombres, identiques ou différents, entiers ou fractionnaires, dont la somme se situe dans l'intervalle allant jusqu'à 100.

ledit procédé étant caractérisé en ce que l'on fait réagir l'anhydride maléique, en présence d'un agent déshydratant, d'une amine tertiaire, d'un diluant organique et d'un catalyseur, sur une diamine à groupement diorganopolysiloxane de formule :

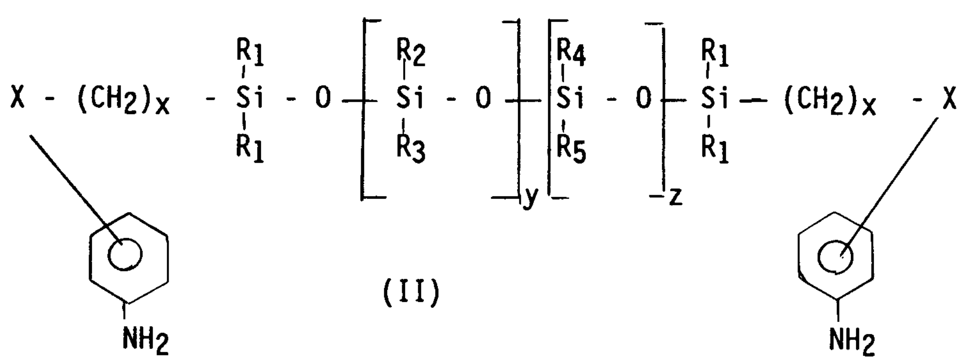

(II)

dans laquelle X, $R_1$, $R_2$, $R_3$, $R_4$, $R_5$, x, y et z ont les significations données ci-avant.

**2.** Procédé selon la revendication 1, caractérisé en ce que l'agent déshydratant est l'anhydride acétique.

**3.** Procédé selon l'une quelconque des revendications 1 et 2 caractérisé en ce que l'amine tertiaire est la triéthylamine, la quantité de ce composé se situant entre 0,05 et 0,8 mole par fonction $NH_2$ disponible.

**4.** Procédé selon l'une quelconque des revendications 1 à 3, caractérisé en ce que le catalyseur est constitué par un dérivé du nickel soluble dans la phase liquide du mélange réactionnel, la quantité de catalyseur se situant entre $0,5.10^{-3}$ et $5.10^{-3}$ moles par fonction $NH_2$ disponible.

**5.** Procédé selon l'une des revendications précédentes, caractérisé en ce que les symboles X, $R_1$, $R_2$, $R_3$, $R_4$, $R_5$, x, y, z des formules (I) et (II) ont répondent à la formule (I) et (II) ont les significations suivantes :

1. ; $R_1$, $R_2$, $R_3$, identiques ou différents, représentent chacun un radical alkyle, linéaire ou ramifié, ayant de 1 à 6 atomes de carbone ; $R_4$, $R_5$ représentent chacun un radical phényle ; x = 2,3,4 ou 5 ; y + z se situe dans l'intervalle allant de 4 à 70.
2. ; $R_1$, $R_2$, $R_4$, identiques ou différents, représentent chacun un radical alkyl linéaire ou ramifié, ayant de 1 à 6 atomes de carbone ; $R_3$, $R_5$ représentent chacun un radical phényle ; x = 2,3,4 ou 5 ; y + z se situe dans l'intervalle allant de 4 à 70.
3. ; $R_1$ représente un radical alkyle linéaire ou ramifié, ayant de 1 à 6 atomes de carbone ; $R_2$, $R_3$, $R_4$ et $R_5$ représentent chacun un radical phényle ; x = 2, 3, 4 ou 5 ; y + z se situe dans l'intervalle allant de 4 à 70.

**6.** Procédé selon la revendication 3, caractérisé en ce que les symboles X, $R_1$, $R_2$, $R_3$, $R_4$, $R_5$, x, y, z ont les significations suivantes :

4. ; $R_1$ = $R_2$ = $R_3$ = radical alkyle linéaire ayant de 1 à 3 atomes de carbone ; $R_4$ = $R_5$ = radical phényle ; x = 2, 3 ou 4 ; y + Z se situe dans l'intervalle allant de 4 à 70.
5. ; $R_1$ = $R_2$ = $R_4$ = radical alkyle linéaire ayant de 1 à 3 atomes de carbone ; $R_3$ = $R_5$ = un radical phényle ; x = 2, 3 ou 4 ; y + z se situe dans l'intervalle allant de 4 à 70.
6. ; $R_1$ = radical alkyle linéaire ayant de 1 à 3 atomes de carbone ; $R_2$ = $R_3$ = $R_4$ = $R_5$ = un radical phényle ; x = 2, 3 ou 4 ; y + z se situe dans l'intervalle allant de 4 à 70.

**7.** Procédé selon la revendication 6, caractérisé en ce que les symboles X, $R_1$, $R_2$, $R_3$, $R_4$, $R_5$, x, y, z ont les significations suivantes :

10. X = - O - ; $R_1$ = $R_2$ = $R_3$ = un radical méthyle ; $R_4$ = $R_5$ = un radical phényle ; x = 3 ; y + z se situe dans l'intervalle allant de 4 à 70.
11. ; $R_1$ = $R_2$ = $R_4$ = un radical méthyle ; $R_3$ = $R_5$ = un radical phényle ; x = 3 ; y + z se situe dans l'intervalle allant de 4 à 70.
12. ; $R_1$ = un radical méthyle ; $R_2$ = $R_3$ = $R_4$ = $R_5$ = un radical phényle ; x = 3 ; y + z se situe dans l'intervalle allant de 4 à 70.

**Claims**
**Claims for the following Contracting States : AT, BE, CH, DE, FR, GB, IT, LI, LU, NL, SE**

**1.** N,N'-Disubstituted bis(maleimides) containing a polydiorganosiloxane group in their structure and not containing an Si-O-C link, characterized in that they correspond to the general formula:

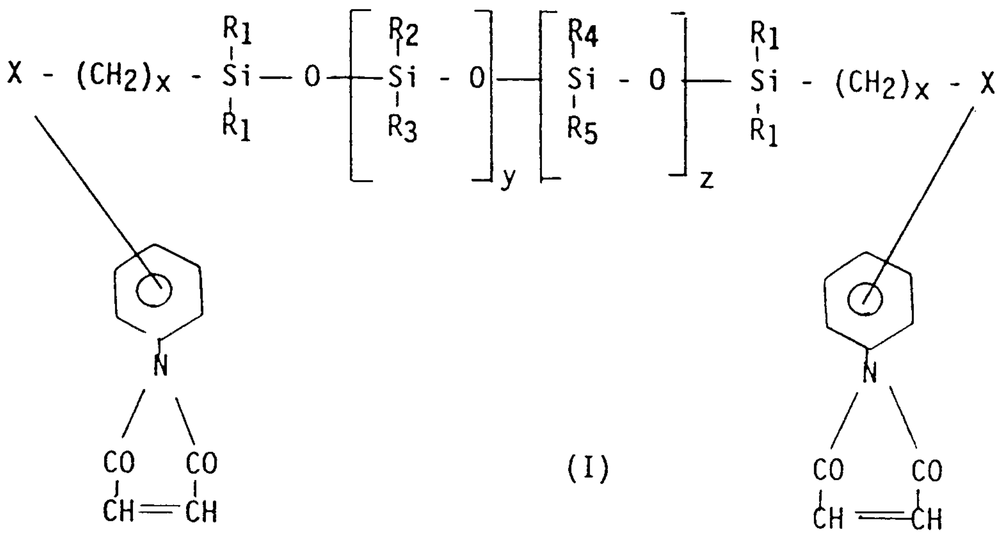

(I)

in which:

X is oxygen

$R_1$ is a linear or branched alkyl radical having from 1 to 12 carbon atoms, optionally substituted with one or more chlorine, bromine or fluorine atoms or with a -CN group

$R_2$, $R_3$, $R_4$ and $R_5$ are each a linear or branched alkyl radical having from 1 to 12 carbon atoms, optionally substituted with one or more chlorine, bromine or fluorine atoms or with a -CN group, or a phenyl radical optionally substituted with one or more alkyl and/or alkoxy radicals having from 1 to 4 carbon atoms or with one or more chlorine atoms; the ratio

$$\frac{\text{number of Si-phenyl bonds (optionally substituted)}}{\text{number of Si-methyl bonds}}$$

being at least 0.25;

the symbol x is an integer falling within the range from 2 to 8;

the symbols y and z are numbers, which may be identical or different, integral or fractional, whose sum falls within the range up to 100.

**2.** Bis(maleimides) according to claim 1, characterized in that they correspond to the formula (I) in which:

1. $R_1$, $R_2$ and $R_3$, which may be identical or different, are each a linear or branched alkyl radical having from 1 to 6 carbon atoms; $R_4$ and $R_5$ are each a phenyl radical; x = 2, 3, 4 or 5; and y + z falls within the range from 4 to 70.
2. $R_1$, $R_2$ and $R_4$, which may be identical or different, are each a linear or branched alkyl radical having from 1 to 6 carbon atoms; $R_3$ and $R_5$ are each a phenyl radical; x = 2, 3, 4 or 5; and y + z falls within the range from 4 to 70.
3. $R_1$ is a linear or branched alkyl radical having from 1 to 6 carbon atoms; $R_2$, $R_3$, $R_4$ and $R_5$ are each a phenyl radical; x = 2, 3, 4 or 5; and y + z falls within the range from 4 to 70.

**3.** Bis(maleimides) according to claim 2, characterized in that they correspond to the formula (I) in which:

4. $R_1$ = $R_2$ = $R_3$ = linear alkyl radical having from 1 to 3 carbon atoms; $R_4$ = $R_5$ = phenyl radical; x = 2, 3 or 4; and y + z falls within the range from 4 to 70.
5. $R_1$ = $R_2$ = $R_4$ = linear alkyl radical having from 1 to 3 carbon atoms; $R_3$ = $R_5$ = a phenyl radical; x = 2, 3 or 4; and y + z falls within the range from 4 to 70.
6. $R_1$ = linear alkyl radical having from 1 to 3 carbon atoms; $R_2$ = $R_3$ = $R_4$ = $R_5$ = phenyl radical; x = 2, 3 or 4; and y + z falls within the range from 4 to 70.

**4.** Bis(maleimides) according to claim 3, characterized in that they correspond to the formula (I) in which:
10. $R_1 = R_2 = R_3$ = a methyl radical; $R_4 = R_5$ = a phenyl radical; x = 3; and y + z falls within the range from 4 to 70.
11. $R_1 = R_2 = R_4$ = a methyl radical; $R_3 = R_5$ = a phenyl radical; x = 3; and y + z falls within the range from 4 to 70.
12. $R_1$ = a methyl radical; $R_2 = R_3 = R_4 = R_5$ = a phenyl radical; x = 3; and y + z falls within the range from 4 to 70.

**5.** Process for preparing the bis(maleimides) of formula (I) according to any one of claims 1 to 4, characterized in that maleic anhydride is reacted, in the presence of a dehydrating agent, a tertiary amine, an organic diluent and a catalyst, with a diamine containing a diorganopolysiloxane group, of formula:

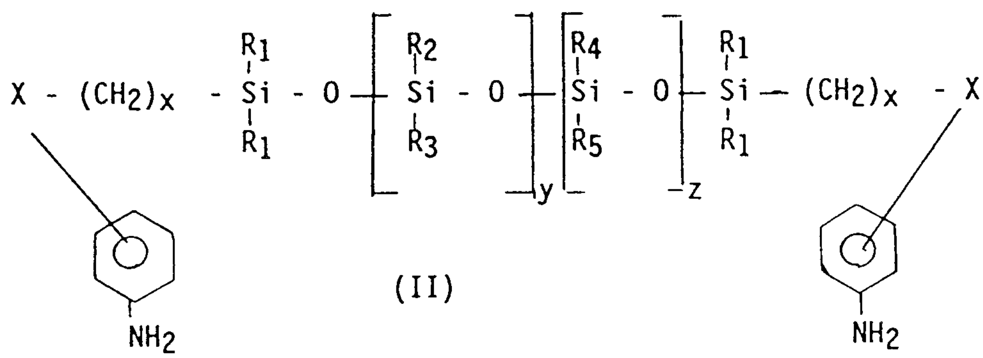

(II)

in which X, $R_1$, $R_2$, $R_3$, $R_4$, $R_5$, x, y and z have the meanings given above in one of claims 1 to 4.

**6.** Process according to claim 5, characterized in that the dehydrating agent is acetic anhydride.

**7.** Process according to either of claims 5 and 6, characterized in that the tertiary amine is triethylamine, the quantity of this compound falling between 0.05 and 0.8 mole per available $NH_2$ group.

**8.** Process according to any one of claims 5 to 7, characterized in that the catalyst consists of a nickel derivative which is soluble in the liquid phase of the reaction mixture, the quantity of catalyst falling between 0.5 x $10^{-3}$ and 5 x $10^{-3}$ moles per available $NH_2$ group.

**Claims for the following Contracting State : ES**

**1.** Process for preparing N,N'-disubstituted bis(maleimides) containing a polydiorganosiloxane group in their structure and not containing an Si-O-C link, characterized in that they correspond to the general formula:

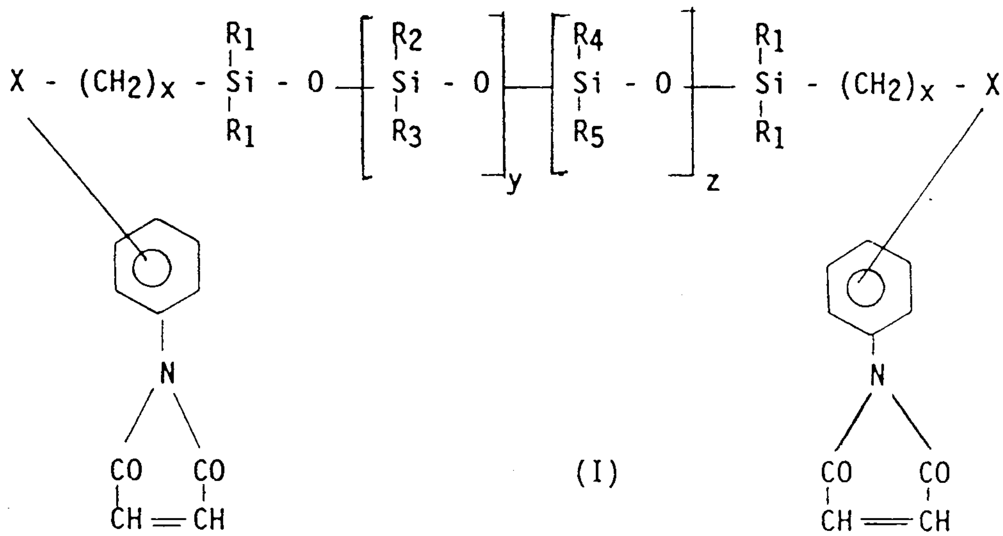

(I)

in which:

X is oxygen

$R_1$ is a linear or branched alkyl radical having from 1 to 12 carbon atoms, optionally substituted with one or more chlorine, bromine or fluorine atoms or with a -CN group

$R_2$, $R_3$, $R_4$ and $R_5$ are each a linear or branched alkyl radical having from 1 to 12 carbon atoms, optionally substituted with one or more chlorine, bromine or fluorine atoms or with a - CN group, or a phenyl radical optionally substituted with one or more alkyl and/or alkoxy radicals having from 1 to 4 carbon atoms or with one or more chlorine atoms; the ratio

$$\frac{\text{number of Si-phenyl bonds (optionally substituted)}}{\text{number of Si-methyl bonds}}$$

being at least 0.25;

the symbol x is an integer falling within the range from 2 to 8;

the symbols y and z are numbers, which may be identical or different, integral or fractional, whose sum falls within the range up to 100

the said process being characterized in that maleic anhydride is reacted, in the presence of a dehydrating agent, a tertiary amine, an organic diluent and a catalyst, with a diamine containing a diorganopolysiloxane group, of formula:

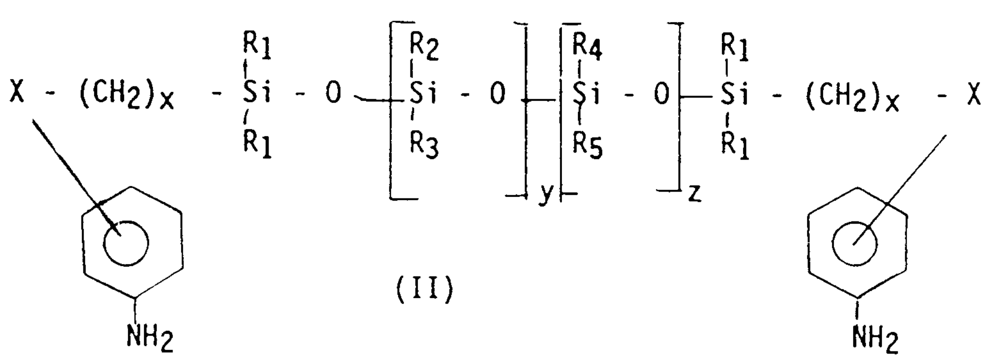

(II)

in which X, $R_1$, $R_2$, $R_3$, $R_4$, $R_5$, x, y and z have the meanings given above.

**2.** Process according to claim 1, characterized in that the dehydrating agent is acetic anhydride.

**3.** Process according to either of claims 1 and 2, characterized in that the tertiary amine is triethylamine, the quantity of this compound falling between 0.05 and 0.8 mole per available $NH_2$ group.

**4.** Process according to any one of claims 1 to 3, characterized in that the catalyst consists of a nickel derivative which is soluble in the liquid phase of the reaction mixture, the quantity of catalyst falling between 0.5 x $10^{-3}$ and 5 x $10^{-3}$ moles per available $NH_2$ group.

**5.** Process according to one of the preceding claims, characterized in that the symbols X, $R_1$, $R_2$, $R_3$, $R_4$, $R_5$, x, y and z in the formulae (I) and (II) have the following meanings:
1. $R_1$, $R_2$ and $R_3$, which may be identical or different, are each a linear or branched alkyl radical having from 1 to 6 carbon atoms; $R_4$ and $R_5$ are each a phenyl radical; x = 2, 3, 4 or 5; and y + z falls within the range from 4 to 70.
2. $R_1$, $R_2$ and $R_4$, which may be identical or different, are each a linear or branched alkyl radical having from 1 to 6 carbon atoms; $R_3$ and $R_5$ are each a phenyl radical; x = 2, 3, 4 or 5; and y + z falls within the range from 4 to 70.
3. $R_1$ is a linear or branched alkyl radical having from 1 to 6 carbon atoms; $R_2$, $R_3$, $R_4$ and $R_5$ are each a phenyl radical; x = 2, 3, 4 or 5; and y + z falls within the range from 4 to 70.

**6.** Process according to claim 3, characterized in that the symbols X, $R_1$, $R_2$, $R_3$, $R_4$, $R_5$, x, y and z have the following meanings :
4. $R_1$ = $R_2$ = $R_3$ = linear alkyl radical having from 1 to 3 carbon atoms; $R_4$ = $R_5$ = phenyl radical; x = 2, 3 or 4; and y + z falls within the range from 4 to 70.
5. $R_1$ = $R_2$ = $R_4$ = linear alkyl radical having from 1 to 3 carbon atoms; $R_3$ = $R_5$ = a phenyl radical; x = 2, 3 or 4; and y + z falls within the range from 4 to 70.
6. $R_1$ = linear alkyl radical having from 1 to 3 carbon atoms; $R_2$ = $R_3$ = $R_4$ = $R_5$ = phenyl radical; x = 2, 3 or 4; and y + z falls within the range from 4 to 70.

**7.** Process according to claim 6, characterized in that the symbols X, $R_1$, $R_2$, $R_3$, $R_4$, $R_5$, x, y and z have the following meanings :
10. $R_1$ = $R_2$ = $R_3$ = a methyl radical; $R_4$ = $R_5$ = a phenyl radical; x = 3; and y + z falls within the range from 4 to 70.
11. $R_1$ = $R_2$ = $R_4$ = a methyl radical; $R_3$ = $R_5$ = a phenyl radical; x = 3; and y + z falls within the range from 4 to 70.
12. $R_1$ = a methyl radical; $R_2$ = $R_3$ = $R_4$ = $R_5$ = a phenyl radical; x = 3; and y + z falls within the range from 4 to 70.

**Patentansprüche**
**Patentansprüche für folgende Vertragsstaaten : AT, BE, CH, DE, FR, GB, IT, LI, LU, NL, SE**

**1.** N,N'-Disubstituierte Bis-Maleimide, die in ihrer Struktur eine Polydiorganosiloxan-Gruppe aufweisen und keine Si-O-C-Bindung umfassen, dadurch gekennzeichnet, daß sie der allgemeinen Formel (I) entsprechen:

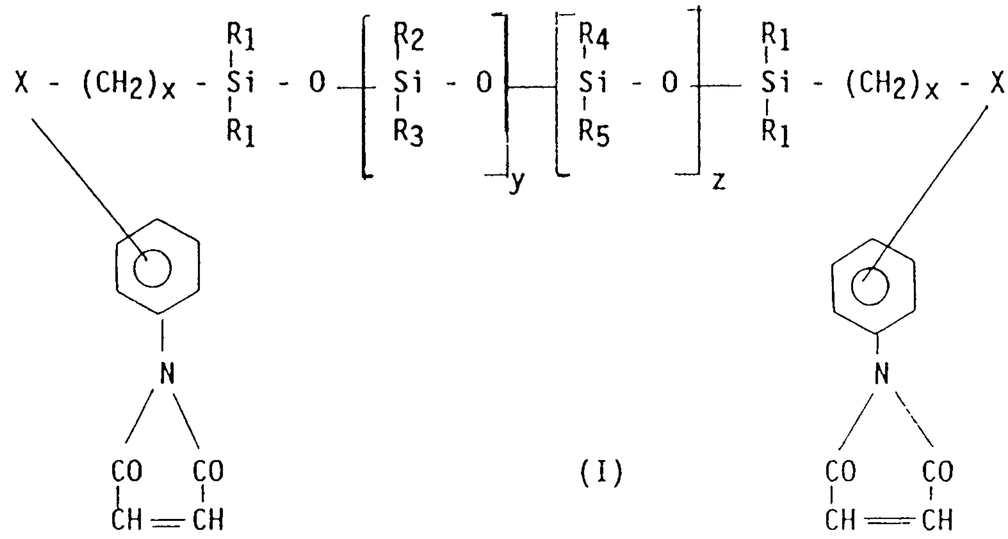

(I)

in der

- X Sauerstoff darstellt,
- $R_1$ einen linearen oder verzweigten Alkyl-Rest mit 1 bis 12 Kohlenstoffatomen bedeutet, gegebenenfalls substituiert durch ein oder mehrere Chlor-, Brom- oder Fluoratome oder durch die Gruppe -CN,
- $R_2$, $R_3$, $R_4$ und $R_5$ jeweils einen linearen oder verzweigten Alkyl-Rest mit 1 bis 12 Kohlenstoffatomen darstellen, gegebenenfalls substituiert durch ein oder mehrere Chlor-, Brom- oder Fluoratome oder durch eine Gruppe -CN, oder einen Phenyl-Rest bedeuten, gegebenenfalls substituiert durch einen oder mehrere Alkyl- und/oder Alkoxy-Reste mit 1 bis 4 Kohlenstoffatomen oder durch ein oder mehrere Chloratome, wobei das Verhältnis

$$\frac{\text{Anzahl der Si-Phenyl-Bindungen (ggfl. substituiert)}}{\text{Anzahl der Si-Methyl-Bindungen}}$$

  mindestens gleich 0,25 ist;
- das Symbol X eine ganze Zahl im Intervall von 2 bis 8 ist;
- die Symbole y und z, gleich oder verschieden, ganze oder gebrochene Zahlen darstellen, deren Summe bis zu 100 beträgt.

**2.** Bis-Maleimide nach Anspruch 1, dadurch gekennzeichnet, daß sie der Formel (I) entsprechen, in der:

1. $R_1$, $R_2$, $R_3$, gleich oder verschieden, jeweils einen linearen oder verzweigten Alkyl-Rest mit 1 bis 6 Kohlenstoffatomen darstellen, $R_4$ und $R_5$ jeweils einen Phenyl-Rest bedeuten, x = 2, 3, 4 oder 5 ist und y + z im Intervall von 4 bis 70 liegt;
2. $R_1$, $R_2$, $R_4$, gleich oder verschieden, jeweils einen linearen oder verzweigten Alkyl-Rest mit 1 bis 6 Kohlenstoffatomen darstellen, $R_3$ und $R_5$ jeweils einen Phenyl-Rest bedeuten, x = 2, 3, 4 oder 5 ist und y + z im Intervall von 4 bis 70 liegt;
3. $R_1$ einen linearen oder verzweigten Alkyl-Rest mit 1 bis 6 Kohlenstoffatomen darstellt, $R_2$, $R_3$, $R_4$ und $R_5$ jeweils einen Phenyl-Rest bedeuten, x = 2, 3, 4 oder 5 ist und y + z im Intervall von 4 bis 70 liegt.

**3.** Bis-Maleimide nach Anspruch 2, dadurch gekennzeichnet, daß sie der allgemeinen Formel (I) entsprechen, in der:

4. $R_1$ = $R_2$ = $R_3$ einen linearen Alkyl-Rest mit 1 bis 3 Kohlenstoffatomen darstellen, $R_4$ = $R_5$ jeweils einen Phenyl-Rest bedeuten, x = 2, 3 oder 4 ist und y + z im Intervall von 4 bis 70 liegt;
5. $R_1$ = $R_2$ = $R_4$ einen linearen Alkyl-Rest mit 1 bis 3 Kohlenstoffatomen darstellen, $R_3$ = $R_5$ jeweils einen Phenyl-Rest bedeuten, x = 2, 3 oder 4 ist und y + z im Intervall von 4 bis 70 liegt;

6. $R_1$ einen linearen Alkyl-Rest mit 1 bis 3 Kohlenstoffatomen darstellt, $R_2 = R_3 = R_4 = R_5$ jeweils einen Phenyl-Rest bedeuten, x = 2, 3 oder 4 ist und y + z im Intervall von 4 bis 70 liegt.

**4.** Bis-Maleimide nach Anspruch 3, dadurch gekennzeichnet, daß sie der Formel (I) entsprechen, in der:
10. $R_1 = R_2 = R_3$ einen Methyl-Rest darstellen, $R_4 = R_5$ jeweils einen Phenyl-Rest bedeuten, x = 3 ist und y + z im Intervall von 4 bis 70 liegt;
11. $R_1 = R_2 = R_4$ einen Methyl-Rest darstellen, $R_3 = R_5$ jeweils einen Phenyl-Rest bedeuten, x = 3 ist und y + z im Intervall von 4 bis 70 liegt;
12. $R_1$ einen Methyl-Rest darstellt, $R_2 = R_3 = R_4 = R_5$ jeweils einen Phenyl-Rest bedeuten, x = 3 ist und y + z im Intervall von 4 bis 70 liegt.

**5.** Verfahren zur Herstellung der Bis-Maleimide der Formel (I) nach einem der Ansprüche 1 bis 4, dadurch gekennzeichnet, daß man Maleinsäure-Anhydrid in Anwesenheit eines dehydratisierenden Mittels, eines tertiären Amins, eines organischen Verdünnungsmittels und eines Katalysators mit einem Diamin mit Diorganopolysiloxan-Gruppen der Formel (II)

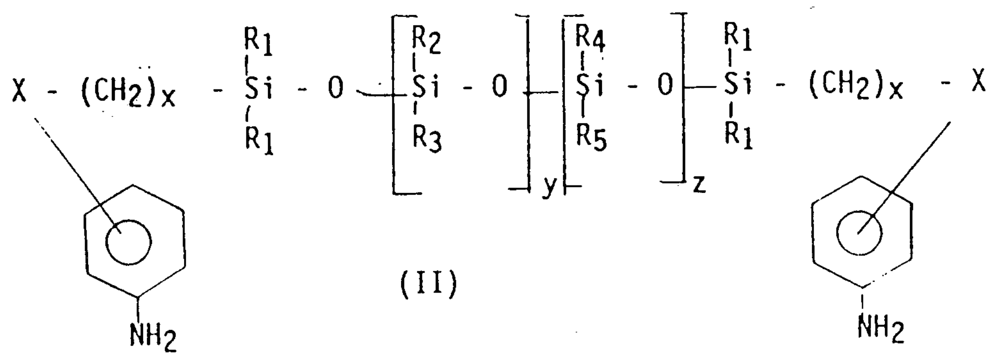

(II)

zur Reaktion bringt, in der X, $R_1$, $R_2$, $R_3$, $R_4$, $R_5$, x, y und z die vorstehend in einem der Ansprüche 1 bis 4 angegebenen Bedeutungen besitzen.

**6.** Verfahren nach Anspruch 5, dadurch gekennzeichnet, daß das dehydratisierende Mittel Essigsäureanhydrid ist.

**7.** Verfahren nach einem der Ansprüche 5 und 6, dadurch gekennzeichnet, daß das tertiäre Amin Triethylamin ist und die Menge dieser Verbindung zwischen 0,05 und 0,8 Mol pro verfügbare $NH_2$-Funktion liegt.

**8.** Verfahren nach einem der Ansprüche 5 bis 7, dadurch gekennzeichnet, daß der Katalysator aus einem Nickel-Derivat besteht, das in der flüssigen Phase der Reaktionsmischung löslich ist, und die Menge des Katalysators zwischen $0{,}5 \cdot 10^{-3}$ und $5 \cdot 10^{-3}$ Mol pro verfügbare $NH_2$-Funktion liegt.

**Patentansprüche für folgenden Vertragsstaat : ES**

**1.** Verfahren zur Herstellung von N,N'-disubstituierten Bis-Maleimiden, die in ihrer Struktur eine Polydiorganosiloxan-Gruppe aufweisen und keine Si-O-C-Bindung umfassen, und die der allgemeinen Formel (I) entsprechen:

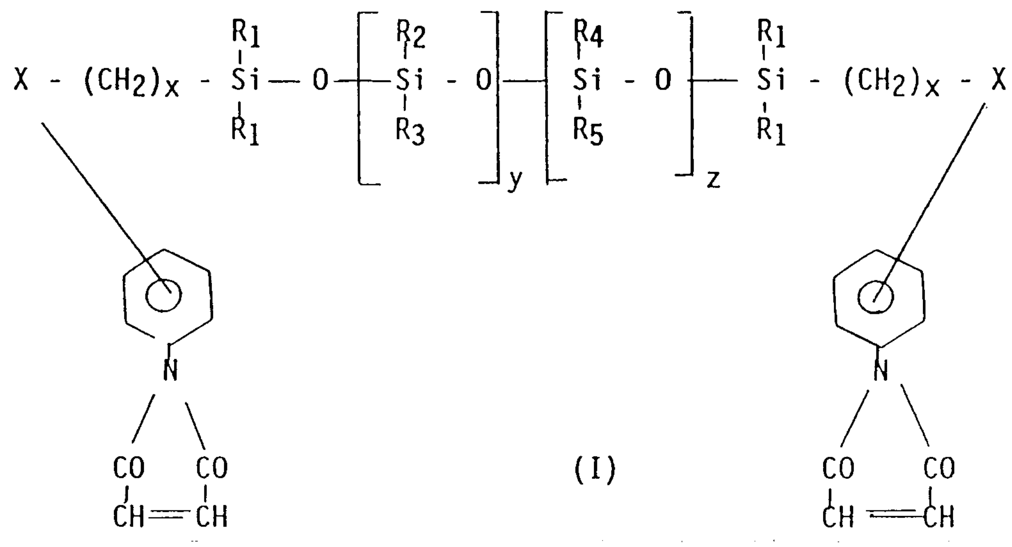

(I)

in der

- X Sauerstoff darstellt,
- $R_1$ einen linearen oder verzweigten Alkyl-Rest mit 1 bis 12 Kohlenstoffatomen bedeutet, gegebenenfalls substituiert durch ein oder mehrere Chlor-, Brom- oder Fluoratome oder durch die Gruppe -CN,
- $R_2$, $R_3$, $R_4$ und $R_5$ jeweils einen linearen oder verzweigten Alkyl-Rest mit 1 bis 12 Kohlenstoffatomen darstellen, gegebenenfalls substituiert durch ein oder mehrere Chlor-, Brom- oder Fluoratome oder durch eine Gruppe -CN, oder einen Phenyl-Rest bedeuten, gegebenenfalls substituiert durch ein oder mehrere Alkyl- und/oder Alkoxy-Reste mit 1 bis 4 Kohlenstoffatomen oder durch ein oder mehrere Chloratome, wobei das Verhältnis

$$\frac{\text{Anzahl der Si-Phenyl-Bindungen}}{\text{Anzahl der Si-Methyl-Bindungen}} \quad \text{(ggfl. substituiert)}$$

  mindestens gleich 0,25 ist;
- das Symbol x eine ganze Zahl im Intervall von 2 bis 8 ist;
- die Symbole y und z, gleich oder verschieden, ganze oder gebrochene Zahlen darstellen, deren Summe bis zu 100 beträgt, dadurch gekennzeichnet, daß man Maleinsäure-Anhydrid in Anwesenheit eines dehydratisierenden Mittels, eines tertiären Amins, eines organischen Verdünnungsmittels und eines Katalysators mit einem Diamin mit Diorganopolysiloxan-Gruppen der Formel (II)

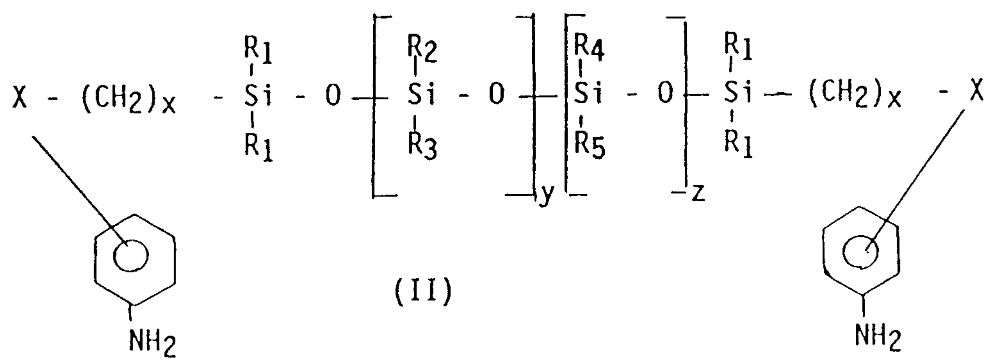

(II)

zur Reaktion bringt, in der X, $R_1$, $R_2$, $R_3$, $R_4$, $R_5$, x, y und z die oben genannten Bedeutungen besitzen.

**2.** Verfahren nach Anspruch 1, dadurch gekennzeichnet, daß das dehydratisierende Mittel Essigsäureanhydrid ist.

**3.** Verfahren nach einem der Ansprüche 1 und 2, dadurch gekennzeichnet, daß das tertiäre Amin Triethylamin ist und die Menge dieser Verbindung zwischen 0,05 und 0,8 Mol pro verfügbare $NH_2$-Funktion liegt.

**4.** Verfahren nach einem der Ansprüche 1 bis 3, dadurch gekennzeichnet, daß der Katalysator aus einem Nickel-Derivat besteht, das in der flüssigen Phase der Reaktionsmischung löslich ist, und die Menge des Katalysators zwischen $0{,}5 \cdot 10^{-3}$ und $5 \cdot 10^{-3}$ Mol pro verfügbare $NH_2$-Funktion liegt.

**5.** Verfahren nach einem der vorstehenden Ansprüche, dadurch gekennzeichnet, daß die Symbole X, $R_1$, $R_2$, $R_3$, $R_4$, $R_5$, x, y und z der Formeln (I) und (II) die folgenden Bedeutungen besitzen:
1. $R_1$, $R_2$, $R_3$, gleich oder verschieden, stellen jeweils einen linearen oder verzweigten Alkyl-Rest mit 1 bis 6 Kohlenstoffatomen dar, $R_4$ und $R_5$ bedeuten jeweils einen Phenyl-Rest, x ist = 2, 3, 4 oder 5 und y + z liegt im Intervall von 4 bis 70;
2. $R_1$, $R_2$, $R_4$, gleich oder verschieden, stellen jeweils einen linearen oder verzweigten Alkyl-Rest mit 1 bis 6 Kohlenstoffatomen dar, $R_3$ und $R_5$ bedeuten jeweils einen Phenyl-Rest, x ist = 2, 3, 4 oder 5 und y + z liegt im Intervall von 4 bis 70;
3. $R_1$ stellt einen linearen oder verzweigten Alkyl-Rest mit 1 bis 6 Kohlenstoffatomen dar, $R_2$, $R_3$, $R_4$ und $R_5$ bedeuten jeweils einen Phenyl-Rest, x ist = 2, 3, 4 oder 5 und y + z liegt im Intervall von 4 bis 70.

**6.** Verfahren nach Anspruch 3, dadurch gekennzeichnet, daß die Symbole X, $R_1$, $R_2$, $R_3$, $R_4$, $R_5$, x, y und z die folgenden Bedeutungen besitzen:
4. $R_1 = R_2 = R_3$ stellen einen linearen Alkyl-Rest mit 1 bis 3 Kohlenstoffatomen dar, $R_4 = R_5$ bedeuten jeweils einen Phenyl-Rest, x ist = 2, 3 oder 4 und y + z liegt im Intervall von 4 bis 70;
5. $R_1 = R_2 = R_4$ stellen einen linearen Alkyl-Rest mit 1 bis 3 Kohlenstoffatomen dar, $R_3 = R_5$ bedeuten jeweils einen Phenyl-Rest, x ist = 2, 3 oder 4 und y + z liegt im Intervall von 4 bis 70;
6. $R_1$ stellt einen linearen Alkyl-Rest mit 1 bis 3 Kohlenstoffatomen dar, $R_2 = R_3 = R_4 = R_5$ bedeuten jeweils einen Phenyl-Rest, x ist = 2, 3 oder 4 und y + z liegt im Intervall von 4 bis 70.

**7.** Verfahren nach Anspruch 6, dadurch gekennzeichnet, daß die Symbole X, $R_1$, $R_2$, $R_3$, $R_4$, $R_5$, x, y und z die folgenden Bedeutungen besitzen:
10. $R_1 = R_2 = R_3$ stellen einen Methyl-Rest dar, $R_4 = R_5$ bedeuten jeweils einen Phenyl-Rest, x ist = 3 und y + z liegt im Intervall von 4 bis 70;
11. $R_1 = R_2 = R_4$ stellen jeweils einen Methyl-Rest dar, $R_3 = R_5$ bedeuten jeweils einen Phenyl-Rest, x ist = 3 und y + z liegt im Intervall von 4 bis 70;
12. $R_1$ stellt einen Methyl-Rest dar, $R_2 = R_3 = R_4 = R_5$ bedeuten jeweils einen Phenyl-Rest, x ist = 3 und y + z liegt im Intervall von 4 bis 70.